# EUROPÄISCHE PATENTANMELDUNG

(11) **EP 1 103 922 A2**
(43) Veröffentlichungstag der Anmeldung: **30.05.2001**
(21) Anmeldenummer: 00124578.6
(22) Anmeldetag: 10.11.2000
(51) Int. Cl.: G07B 15/00, G07F 7/08

(54) **Kartenbuchung mittels einer virtuellen Eintrittskarte**

(30) Priorität: 24.11.1999 DE 19956359
(71) Anmelder: ALCATEL, 75008 Paris (FR)
(72) Erfinder: Lautenschlager, Wolfgang, 71287 Weissach-Flacht (DE); Stürz, Heinz, 01187 Dresden (DE)
(74) Vertreter: KOHLER SCHMID + PARTNER

(57) **Zusammenfassung**

Ein Verfahren zur Buchung einer Reservierung für den Zutritt zu einer Veranstaltung und Bereitstellung eines Reservierungsnachweises bzw. einer Zutrittsberechtigung durch einen Anbieter bei einem Kunden ist gekennzeichnet durch folgende Schritte:
- der Kunde fordert die gewünschte Reservierung beim Anbieter an;
- der Anbieter stellt - ggf. gegen Bezahlung, Abbuchung oder auf Rechnung - dem Kunden ein elektrisches Signal bereit, das in codierter Form Daten umfaßt, die eine Zutrittsberechtigung zu der vom Kunden gewünschten Veranstaltung enthalten;
- die Daten werden auf einer Karte mit automatisch, vorzugsweise elektronisch lesbarem Datenträger als virtuelle Eintrittskarte abgespeichert;
- beim Eintritt zu der gebuchten Veranstaltung legitimiert sich der Kunde oder ein vom Kunden dazu Berechtigter durch Vorlage der Karte in einer Einrichtung zum Auslesen der auf dem Datenträger der Karte gespeicherten Daten, welche die darin enthaltene Zutrittsberechtigung erkennen kann.

Damit werden mit einfachen Mitteln die Nachteile bisher üblicher Kartenbuchungsverfahren wie telefonische Bestellung und Hinterlegung einer reservierten Karte zur Abholung beim Eintritt vermieden.

## Beschreibung

Die Erfindung betrifft ein Verfahren zur Buchung einer Reservierung für den Zutritt zu einer Veranstaltung und Bereitstellung eines Reservierungsnachweises bzw. einer Zutrittsberechtigung durch einen Anbieter bei einem Kunden.

Gegenwärtig können Eintrittskarten an verschiedenen Stellen gekauft werden. Dabei erhält man normalerweise die Eintrittskarte in Papierform. Diese Prozedur ist zeit- und personalintensiv. Rückgabe und Änderung nach Ausgabe der Eintrittskarte sind ebenfalls kompliziert wie auch zeit- und personalintensiv.

Telefonische bzw. elektronische Bestellungen sind inzwischen auch möglich, aber an der Zustellung der Eintrittskarte in Papierform ändert sich nichts. Dabei wird ein Nachteil offensichtlich: Die kurzfristige Buchung einer Eintrittskarte ist nicht möglich, da für die Zustellung per Post einige Tage vorgesehen werden müssen. Die Abholung einer lediglich reservierten Eintrittskarte vor Beginn der Veranstaltung zwingt andererseits zu einer früheren Anreise zum Veranstaltungsort und birgt dennoch immer das Risiko in sich, dass die Reservierung bei einer nicht rechtzeitigen Abholung der hinterlegten bzw. reservierten Eintrittskarte verfällt.

Aufgabe der vorliegenden Erfindung ist es, ein Kartenbuchungsverfahren der eingangs genannten Art vorzustellen, das mit möglichst einfachen Mitteln diese Nachteile vermeidet.

Erfindungsgemäß wird dies durch folgende Verfahrensschritte erreicht:
Der Kunde fordert die gewünschte Reservierung beim Anbieter an;
der Anbieter stellt - ggf. gegen Bezahlung, Abbuchung oder auf Rechnung - dem Kunden ein elektrisches Signal bereit, das in codierter Form Daten umfaßt, die eine Zutrittsberechtigung zu der vom Kunden gewünschten Veranstaltung enthalten;
die Daten werden auf einer Karte mit automatisch, vorzugsweise elektronisch lesbarem Datenträger als virtuelle Eintrittskarte abgespeichert;
beim Eintritt zu der gebuchten Veranstaltung legitimiert sich der Kunde oder ein vom Kunden dazu Berechtigter durch Vorlage der Karte in einer Einrichtung zum Auslesen der auf dem Datenträger der Karte gespeicherten Daten, welche die darin enthaltene Zutrittsberechtigung erkennen kann.

Der Grundgedanke der vorliegenden Erfindung besteht darin, daß bei der Buchung die Eintrittskarte nicht in Papierform ausgegeben wird, sondern daß die "virtuelle Eintrittskarte" beispielsweise in elektronischer Form auf einer Chipkarte gebucht wird. Im folgenden wird nur noch der Begriff Chipkarte verwendet, es können aber auch Magnetkarten oder andere Medien verwendet werden, wie etwa mit elektronischen Einrichtungen mechanisch oder optisch auslesbare Lochkarten oder optisch auslesbare Barcode-Karten.

Dabei können eine oder auch mehrere virtuelle Eintrittskarten auf einer Chipkarte gebucht werden. Auf einer Chipkarte können Veranstaltungen verschiedener Veranstalter gebucht werden. Beim Eintrag einer "Kartenbuchung" wird eine Kennung des Veranstalters mit vermerkt.

Die Eintrittsberechtigung kann dem Veranstaltungsbesucher dann vor der Veranstaltung in verschiedenen Ausprägungen erfolgen (Ausdruck der Eintrittskarte vor Ort, automatischer Einlaß,...) wie nachstehend beschrieben.

Für die Rücknahme der Buchung kann das gleiche Verfahren in umgekehrter Richtung verwendet werden. Ein bereits bezahlter Geldbetrag kann auf dem umgekehrten Weg wie die Buchung gegebenenfalls nach Abzug einer Stornierungsgebühr gutgeschrieben werden.

Es ist auch möglich, gleichzeitig mit der Veranstaltungsbuchung eine Berechtigung für verbilligte oder gegebenenfalls kostenfreie Parkmöglichkeiten auf der Karte abzuspeichern. Es ist auch möglich, mit der Buchung gleichzeitig eine Fahrkarte für Öffentliche Verkehrsmittel zu vergeben. Bisher mußte der Veranstaltungsbesucher die Fahrkarte entwerten (meist per Stempel); mit der erfindungsgemäßen Karte kann der Veranstaltungsbesucher die Karte in den Fahrkartenautomaten stecken, der dann eine Fahrkarte für eine einmalige Fahrt ausgibt.

Die Buchung der Eintrittsberechtigung auf der Chipkarte kann wie heute an dazu bestimmten Karten-Vorverkaufsstellen erfolgen. Besonders vorteilhaft ist die erfindungsgemäße Methode jedoch für eine elektronische Buchung, insbesondere über ein Telekommunikations-Netzwerk.

Die Buchung kann an einem Telefon mit geeignetem Kartenleser vorgenommen werden. Der Veranstaltungsbesucher ruft von einem Telefon mit Kartenleser bei einem Kartenvorverkäufer an. Mit dem Anruf erreicht der Veranstaltungsbesucher, wie heute üblich, eine Person. Der Veranstaltungsbesucher vereinbart durch ein Gespräch die Einzelheiten des Veranstaltungsbesuchs. Danach kann ein Geldbetrag vom Konto des Kunden oder aber über eine Kreditkarte abgebucht werden, die zuerst in den Kartenleser eingelegt wird.

Es ist auch möglich, daß anstelle der Person eine computergesteuerte Ansage und Spracherkennung den Bestellungsprozeß steuert. Dann wird die Auswahl der Veranstaltungseinzelheiten im Dialog mit der Maschine vorgenommen.

Danach kann die elektronische Eintrittskarte auf der Chipkarte eingetragen werden.

Die Buchung kann alternativ auch an einem PC mit Kartenleser vorgenommen werden, der beispielsweise Zugang zum Internet hat.

Der Veranstaltungsbesucher ruft dann von einem PC mit Kartenleser eine WWW-Seite an. Der Veranstaltungsbesucher wählt die Einzelheiten des Veranstaltungsbesuchs auf der WWW-Seite aus. Dann kann der Geldbetrag vom Konto abgebucht werden oder aber über eine Kreditkarte gebucht werden, die zuerst in den Kartenleser eingelegt wird.

Danach kann die elektronische Eintrittskarte auf der Chipkarte eingetragen werden.

Zur Sicherung gegen Betrug und um Fälschungen von Eintrittsberechtigungen zu verhindern, können verschiedene Zusatzmaßnahmen erforderlich werden.

Besonders bevorzugt ist eine Variante des erfindungsgemäßen Verfahrens, die sich dadurch auszeichnet, daß zusätzlich zum Abspeichern der virtuellen Eintrittskarte auf der Karte des Kunden eine übergeordnete Zutrittsberechtigung (=Master Ticket) auf einem zentralen Server abgespeichert wird, zu dem der Anbieter, der Veranstalter oder ein Beauftragter Zugang hat, und daß beim Eintritt des Kartenbesitzers zu der gebuchten Veranstaltung die Gültigkeit der auf dem Datenträger der Karte gespeicherten Zutrittsberechtigung durch Abfrage der Daten des Master Tickets überprüft wird. Die Gültigkeit des Master Tickets kann beispielsweise von einem später erfolgenden Zahlungseingang durch den bestellenden Kunden abhängig gemacht werden. Vorteilhaft bei dieser Verfahrensweise ist auch, daß die erfindungsgemäße Karte mit der virtuellen Eintrittskarte aufgrund der parallelen Kontrollmöglichkeit besonders simpel ausgeführt werden kann.

Vorzugsweise wird im Master Ticket der erfolgte Eintritt des Kartenbesitzers zur Veranstaltung registriert, damit Mißbrauch durch wiederholten Eintritt ausgeschlossen werden kann.

Des weiteren kann das Master Ticket auch Informationen über die Adresse des buchenden Kunden im Telekommunikations-Netzwerk enthalten. Diese Informationen können beispielsweise vom Anbieter dazu genutzt werden, dem Kunden weitere nützliche Informationen im Zusammenhang mit der gebuchten Veranstaltung, beispielsweise Änderungen des Termins oder der Örtlichkeit sowie für weitere Veranstaltungen zukommen zu lassen.

Als zusätzliche Schutzmaßnahme zur Sicherung der Karte gegen Mißbrauch kann auch eine persönliche Identifikationsnummer (= PIN) verwendet werden.

Ein weiterer Schutz gegen unberechtigtes Kopieren der auf dem Datenträger der Karte gespeicherten Daten kann in der Verwendung einer Verschlüsselung, insbesondere eines Schlüssels wie bei der SIM-Karte für den Mobilfunk liegen.

Die Kontrolle der Zutrittsberechtigung kann dadurch erfolgen, daß am Ort der gebuchten Veranstaltung und/oder an weiteren Orten einer oder mehrere Kartendrucker bereitgestellt werden, die mit einer Einrichtung zum Auslesen der auf dem Datenträger der Karte gespeicherten Daten, welche die darin enthaltene Zutrittsberechtigung erkennen kann, verbunden sind, daß die Kartendrucker bei Vorlage einer Karte mit gültiger virtueller Eintrittskarte eine normale Eintrittskarte zu der entsprechenden Veranstaltung in Papierform ausdrucken und daß daraufhin die Daten der virtuellen Eintrittskarte auf der Karte gelöscht und/oder zur Verhinderung des Ausdruckens einer weiteren papierenen Eintrittskarte ein entsprechendes Signal an einen zentralen Server abgesandt wird.

Eine alternative Verfahrensvariante besteht darin, daß am Ort der gebuchten Veranstaltung mindestens eine Einrichtung zum Auslesen der auf dem Datenträger der Karte gespeicherten Daten, welche die darin enthaltene Zutrittsberechtigung erkennen kann, bereitgestellt wird, und daß bei Vorlage einer Karte mit gültiger virtueller Eintrittskarte die Einrichtung dem vorlegenden Kartenbesitzer den Zutritt zu der gebuchten Veranstaltung freigibt und die Daten der virtuellen Eintrittskarte auf der Karte löscht und/oder zur Verhinderung eines abermaligen Eintritts des Kartenbesitzers zu derselben Veranstaltung ein entsprechendes Signal an einen zentralen Server absendet.

Diese Verfahrensvariante kann auch noch dadurch ergänzt werden, daß an die Einrichtung zum Auslesen der auf dem Datenträger der Karte gespeicherten Daten ein Kartendrucker angeschlossen ist, der bei Vorlage einer Karte mit gültiger virtueller Eintrittskarte eine Eintrittskarte zu der entsprechenden Veranstaltung in Papierform, insbesondere eine Platzkarte ausdruckt.

Die vorstehend genannten Merkmale können erfindungsgemäß jeweils einzeln für sich oder zu mehreren in beliebigen Kombinationen Verwendung finden. Die beschriebenen Ausführungsformen der Erfindung sind deshalb nicht als abschließende Aufzählung zu verstehen, sondern haben vielmehr beispielhaften Charakter für die Schilderung der Erfindung.

## Patentansprüche

1. Verfahren zur Buchung einer Reservierung für den Zutritt zu einer Veranstaltung und Bereitstellung eines Reservierungsnachweises bzw. einer Zutrittsberechtigung durch einen Anbieter bei einem Kunden, gekennzeichnet durch folgende Schritte:
der Kunde fordert die gewünschte Reservierung beim Anbieter an;
der Anbieter stellt - ggf. gegen Bezahlung, Abbuchung oder auf Rechnung - dem Kunden ein elektrisches Signal bereit, das in codierter Form Daten umfaßt, die eine Zutrittsberechtigung zu der vom Kunden gewünschten Veranstaltung enthalten;
die Daten werden auf einer Karte mit automatisch, vorzugsweise elektronisch lesbarem Datenträger als virtuelle Eintrittskarte abgespeichert;
beim Eintritt zu der gebuchten Veranstaltung legitimiert sich der Kunde oder ein vom Kunden dazu Berechtigter durch Vorlage der Karte in einer Einrichtung zum Auslesen der auf dem Datenträger der Karte gespeicherten Daten, welche die darin enthaltene Zutrittsberechtigung erkennen kann.

2. Verfahren nach Anspruch 1, dadurch gekennzeichnet, daß das elektrische Signal mit den die Zutrittsberechtigung enthaltenden Daten über ein Telekommunikations-Netzwerk an den Kunden übermittelt wird.

3. Verfahren nach Anspruch 2, dadurch gekennzeichnet, daß das elektrische Signal über ein Telefon kundenseitig empfangen wird, wobei eine Einrichtung zum Abspeichern der die Zutrittsberechtigung enthaltenden Daten auf der Karte am kundenseitigen Endgerät angeschlossen ist.

4. Verfahren nach Anspruch 2, dadurch gekennzeichnet, daß das elektrische Signal über einen Personal Computer (=PC) kundenseitig empfangen wird, wobei eine Einrichtung zum Abspeichern der die Zutrittsberechtigung enthaltenden Daten auf der Karte am kundenseitigen PC angeschlossen ist.

5. Verfahren nach einem der Ansprüche 3 oder 4, dadurch gekennzeichnet, daß die Einrichtung zum Abspeichern der Daten auf der Karte auch zum Auslesen der Daten aus dem Datenspeicher der Karte verwendet werden kann.

6. Verfahren nach Anspruch 5, dadurch gekennzeichnet, daß zur Stornierung einer bereits vorgenommenen Buchung die Karte in die Einrichtung zum Abspeichern und Auslesen der Daten eingelegt, eine Telelommunikationsverbindung zum Anbieter bzw. einem von diesem bereitgestellten zentralen Server hergestellt, die virtuelle Eintrittskarte auf dem Datenträger gelöscht und ggf. nach Abzug einer Stornierungsgebühr dem Kunden ein bereits gezahlter Preis für die Eintrittskarte gutgeschrieben wird.

7. Verfahren nach einem der vorhergehenden Ansprüche, dadurch gekennzeichnet, daß die Karte eine Chipkarte, eine Magnetkarte, eine Lochkarte oder eine Barcode-Karte ist.

8. Verfahren nach einem der vorhergehenden Ansprüche, dadurch gekennzeichnet, daß mehrere virtuelle Eintrittskarten nebeneinander auf dem Datenträger derselben Karte abgespeichert werden können.

9. Verfahren nach einem der vorhergehenden Ansprüche, dadurch gekennzeichnet, daß auf dem Datenträger derselben Karte virtuelle Eintrittskarten unterschiedlicher Anbieter abgespeichert werden können.

10. Verfahren nach einem der vorhergehenden Ansprüche, dadurch gekennzeichnet, daß beim Abspeichern der virtuellen Eintrittskarte eine den Anbieter charakterisierende Kennung mit abgespeichert wird.

11. Verfahren nach einem der vorhergehenden Ansprüche, dadurch gekennzeichnet, daß zusätzlich zum Abspeichern der virtuellen Eintrittskarte auf der Karte des Kunden eine übergeordnete Zutrittsberechtigung (=Master Ticket) auf einem zentralen Server abgespeichert wird, zu dem der Anbieter, der Veranstalter oder ein Beauftragter Zugang hat, und daß beim Eintritt des Kartenbesitzers zu der gebuchten Veranstaltung die Gültigkeit der auf dem Datenträger der Karte gespeicherten Zutrittsberechtigung durch Abfrage der Daten des Master Tickets überprüft wird.

12. Verfahren nach Anspruch 11, dadurch gekennzeichnet, daß im Master Ticket der erfolgte Eintritt des Kartenbesitzers registriert wird.

13. Verfahren nach Anspruch 2 und einem der Ansprüche 11 oder 12, dadurch gekennzeichnet, daß das Master Ticket auch Information über die Adresse des buchenden Kunden im Telekommunikations-Netzwerk enthält.

14. Verfahren nach einem der vorhergehenden Ansprüche, dadurch gekennzeichnet, daß als Schutzmaßnahme zur Sicherung der Karte gegen Mißbrauch eine persönliche Identifikationsnummer (= PIN) verwendet wird.

15. Verfahren nach einem der vorhergehenden Ansprüche, dadurch gekennzeichnet, daß zum Schutz gegen unberechtigtes Kopieren der auf dem Datenträger der Karte gespeicherten Daten eine Verschlüsselung, insbesondere ein Schlüssel wie bei der SIM-Karte für den Mobilfunk verwendet wird.

16. Verfahren nach einem der Ansprüche 1 bis 15, dadurch gekennzeichnet, daß am Ort der gebuchten Veranstaltung und/oder an weiteren Orten einer oder mehrere Kartendrucker bereitgestellt werden, die mit einer Einrichtung zum Auslesen der auf dem Datenträger der Karte gespeicherten Daten, welche die darin enthaltene Zutrittsberechtigung erkennen kann, verbunden sind, daß die Kartendrucker bei Vorlage einer Karte mit gültiger virtueller Eintrittskarte eine normale Eintrittskarte zu der entsprechenden Veranstaltung in Papierform ausdrucken, und daß daraufhin die Daten der virtuellen Eintrittskarte auf der Karte gelöscht und/oder zur Verhinderung des Ausdruckens einer weiteren papierenen Eintrittskarte ein entsprechendes Signal an einen zentralen Server abgesandt wird.

17. Verfahren nach einem der Ansprüche 1 bis 15, dadurch gekennzeichnet, daß am Ort der gebuchten Veranstaltung mindestens eine Einrichtung zum Auslesen der auf dem Datenträger der Karte gespeicherten Daten, welche die darin enthaltene Zutrittsberechtigung erkennen kann, bereitgestellt wird, und daß bei Vorlage einer Karte mit gültiger virtueller Eintrittskarte die Einrichtung dem vorlegenden Kartenbesitzer den Zutritt zu der gebuchten Veranstaltung freigibt und die Daten der virtuellen Eintrittskarte auf der Karte löscht und/oder zur Verhinderung eines abermaligen Eintritts des Kartenbesitzers zu derselben Veranstaltung ein entsprechendes Signal an einen zentralen Server absendet.

18. Verfahren nach Anspruch 17, dadurch gekennzeichnet, daß an die Einrichtung zum Auslesen der auf dem Datenträger der Karte gespeicherten Daten ein Kartendrucker angeschlossen ist, der bei Vorlage einer Karte mit gültiger virtueller Eintrittskarte eine Eintrittskarte zu der entsprechenden Veranstaltung in Papierform, insbesondere eine Platzkarte ausdruckt.

19. Verfahren nach einem der vorhergehenden Ansprüche, dadurch gekennzeichnet, daß zusammen mit der virtuellen Eintrittskarte auf dem Datenträger der Karte auch Daten abgespeichert werden, die bei Vorlage der Karte zu einer verbilligten Parkgebühr in Parkeinrichtungen im räumlichen Umfeld des Veranstaltungsortes berechtigen.

20. Verfahren nach einem der vorhergehenden Ansprüche, dadurch gekennzeichnet, daß zusammen mit der virtuellen Eintrittskarte auf dem Datenträger der Karte auch Daten abgespeichert werden, die bei Vorlage der Karte zum Bezug einer verbilligten Fahrkarte, insbesondere in öffentlichen Verkehrsmitteln im räumlichen Umfeld des Veranstaltungsortes berechtigen.

21. Verfahren nach Anspruch 20, dadurch gekennzeichnet, daß durch Einlegen der Karte in einen Fahrkartenautomaten die Ausgabe einer verbilligten Fahrkarte bewirkt wird, und daß nach dem Erhalt der Fahrkarte die entsprechende Berechtigung auf der Karte gelöscht und/oder zur Verhinderung eines abermaligen begünstigten Fahrkartenbezugs desselben Kartenbesitzers ein entsprechendes Signal an einen zentralen Server abgesandt wird.

22. Zentrale Servereinheit zur Unterstützung des Verfahrens nach einem der Ansprüche 1 bis 21.

23. Computerprogramm zur Durchführung des Verfahrens nach einem der Ansprüche 1 bis 21.
